# EUROPEAN PATENT APPLICATION

(11) **EP 0 558 818 A1**
(43) Date of publication of application: **08.09.1993**
(21) Application number: 92121747.7
(22) Date of filing: 21.12.1992
(51) Int. Cl.: H02K 7/09, F16C 39/06

(54) **Superconducting bearings**

(30) Priority: 05.03.1992 US 846647
(71) Applicant: AlliedSignal Inc., Morristown, New Jersey 07962-2245 (US)
(72) Inventor: Rigney II,Thomas K., Torrance California 90504 (US); Saville, Marshall P., Lawndale California 90260 (US); McCarty, Frederick B., San Pedro California 90732 (US)
(74) Representative: Poidatz, Emmanuel

(57) **Abstract**

A superconducting bearing (10, 32, 18, 42) includes a laminated structure having at least two stacked magnets (16a-16c, 36a-36b, 24a-24f, 46a-46d) with at least one metallic shim (17, 26, 26, 76) being disposed between adjacent magnets. The magnets can be stacked in either opposing or alternating polarity. By stacking the magnets, flux lines are shortened. As a result, flux gradient density and, therefore, bearing stiffness are increased.

## Description

This invention relates to passive magnetic bearings and in particular to superconducting journal and thrust bearings.

### BACKGROUND ART

Agarwala U.S. Patent No. 4,892,863 discloses a superconducting thrust bearing including a magnet that is placed above a disk made of either Type I or Type II superconducting material. When the disk is cooled below its critical temperature T_{C}, it excludes some or all of the flux lines from the magnet. This flux exclusion causes the magnet to levitate above the disk. When subjected to external loads, the magnet is forced towards the surface of the disk. Resulting from the interaction of flux lines is a reactive, i.e., restoring, force which resists the motion of the magnet. As the external load increases, the reactive force also increases. For a superconducting journal bearing, see Gyorgy et al. U.S. Patent No. 4,797,386 (a cylindrical magnet is located within a hollow cylinder made of Type II superconducting material).

The bearing's load capacity is proportional to the magnet's flux density, which is defined as the amount of magnetic flux per unit area. Higher flux densities enable the bearing to operate under greater loads. Load capacity can be increased by increasing flux density.

The bearing's stiffness is proportional to flux density gradient, which can be defined as the change of flux density from a distance x normal to the magnetic surface. Flux density gradient, in turn, is proportional to the change in restoring force over distance from the magnetic surface. High bearing stiffness is often desirable to maintain accurate rotor positioning.

Therefore, it is an object of the present invention to increase load capacity of superconducting bearings.

It is a further object of the present invention to increase stiffness of superconducting bearings.

### DISCLOSURE OF THE INVENTION

Bearing load capacity and stiffness can be increased by stacking magnets together. Stacking causes the flux lines from the magnets to shorten and to increase in number. When the magnets are stacked in opposing polarity, they are separated by permeable metallic shims. When the magnets are stacked in alternating polarity, they are separated by non-permeable metallic shims.

### BRIEF DESCRIPTION OF THE DRAWINGS

Figure 1 is a diagram of a superconducting thrust bearing employing magnets stacked in alternating polarity;
Figure 2 is a cross-sectional view of a journal bearing employing magnets stacked in alternating polarity;
Figure 3 is a diagram of a superconducting thrust bearing employing stacked magnets in opposing polarity;
Figure 4 is a graph of restoring force versus distance for the superconducting bearing shown in Figure 2;
Figure 5 is a cross-sectional view of a journal bearing employing magnets stacked in opposing polarity; and
Figure 6 is a schematic diagram of a bearing-shaft system.

### BEST MODE FOR CARRYING OUT THE INVENTION

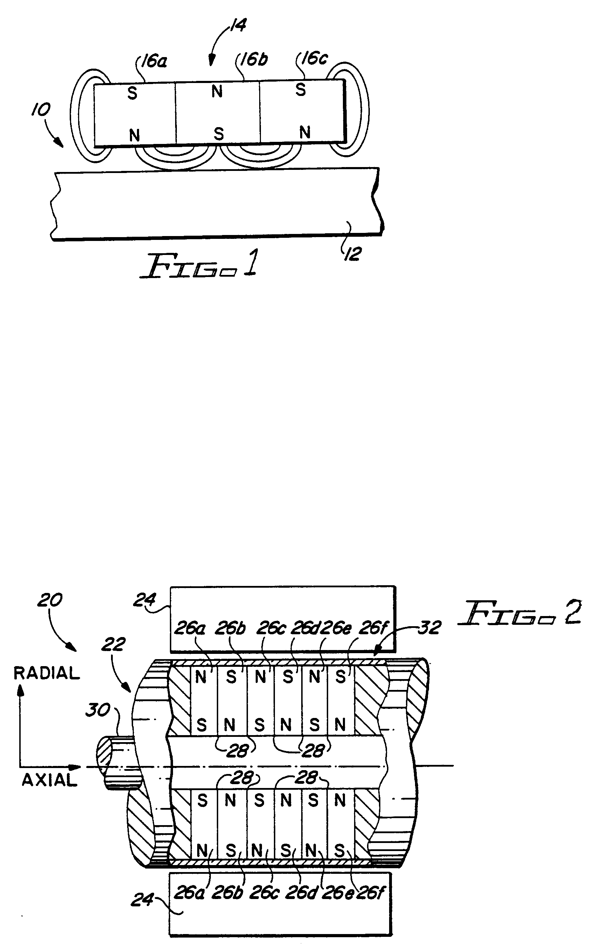

Figure 1 shows a thrust bearing 10 having a superconducting member 12 and a laminate structure 14 of permanent magnets 16a, 16b and 16c stacked in one particular arrangement. One surface of the laminate structure 14 faces the superconducting member 12. The magnets 16a, 16b and 16c are arranged in alternating polarity. Thus, the north poles of the first and third magnets 16a and 16b and the south pole of the second magnet 16b face the superconducting member 12. Flux lines flow between the north and south poles of the end (i.e. first and third) magnets 16a and 16c. Further, this arrangement allows magnetic flux lines to flow between poles of adjacent magnets. Thus, one set of flux lines flows between the first and second magnets 16a and 16b and a second set of flux lines flows between the second and third magnets 16b and 16c. By laminating the magnets 16a, 16b and 16c in this manner, the number of flux lines per unit area is increased. As a result, flux density is increased between North and South poles at the one surface of the laminate structure 16b and 16c. Further, the lengths of the flux lines are shortened. As a result, the flux density gradient is increased.

Non-magnetic shims 17 are placed between the magnets 16a, 16b and 16c to reduce flux leakage. The shims 17 are made of a non-ferrous magnetic material having low thermal distortion.

The member 12 is made of a melt-textured superconducting material. Although the material can be a Type I superconductor, a Type II superconductor is preferred because of its superior stability due to flux-pinning.

During operation, the member 12 is cooled to a temperature below its critical temperature T_{C} (93°K for YBa₂Cu₃Oₓ). As the operating temperature is decreased below the critical temperature T_{c}, the load capacity and stiffness of the bearing 10 is increased dramatically. See Weinberger, B.R. et al., Supercond. Sci. Technol., Vol 3, p. 381 (1990). Liquid nitrogen cools the member 12 to a temperature of 77°K. The resulting flux-pinning causes the structure 14 to be levitated above the member 12. While the structure 14 can rotate freely about an axis normal to the surface of the member 12, it cannot be translated across the surface of the member 12 without encountering a nominal resistance. The translation results in a change in the distribution of the flux pinned inside the member 12. However, the Type II superconducting material of the member 12 resists such change.

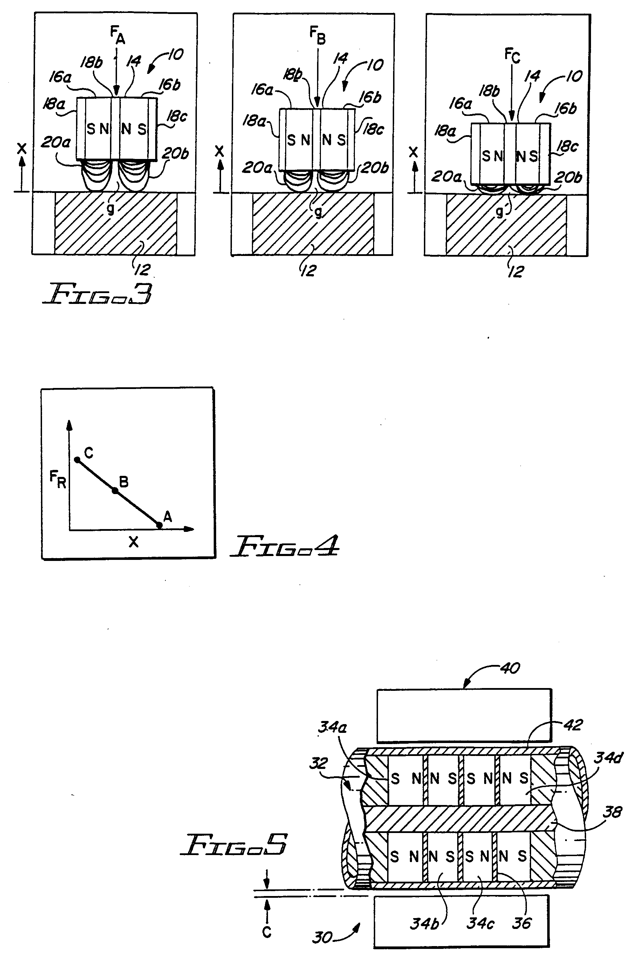

Referring now to Figure 2, a journal bearing 18 includes a rotor 20 and a hollow cylinder 22, which functions as a stator. The cylinder 22 is made from a Type II superconductor such as YBa₂Cu₃Oₓ.

The rotor 20 is a laminate structure that includes a plurality of annular magnets 24a-24f. Each annular magnet 24a-24f is a rare earth magnet, such as samarium-cobalt magnet or neodymium-iron-boron magnet. The annular magnets 24a-24f are magnetized in a radial direction and are stacked side-by-side in alternating polarity. Non-magnetic shims 26 are disposed between the magnets 24a-24f to reduce flux leakage.

A tie rod 28 extends through the longitudinal axes of the annular magnets 24a-24f. The tie rod 28 is made of a material having a high coefficient of permeability. For low speed applications, the annular magnets 24a-24f can be attached to the tie rod 18 by epoxy. For high speed applications, however, the annular magnets 24a-24f are attached to the tie rod 28 by bolting the ends of the tie rod 28 such that the annular magnets 24a-24f and shims 26 are pressed together.

The rotor 20 is located within the hollow cylinder 22. The magnet-to-superconductor clearances must be low in order to take advantage of the higher flux density and flux gradient.

A retaining sleeve 30 is employed to hold the magnets 24a-24f in the rotor 20. Although the highest bearing stiffness and capacity is achieved without the retaining sleeve 30, the stresses in the tie rod 28 resulting from high rotational speeds may necessitate its use. The retaining sleeve 30 can be made of a non-ferrous, high strength metal such as beryllium copper or inconel 718. Alternately, the retaining sleeve 30 can be made of high strength fibers such as filament-wound graphite or Kevlar. The clearance and minimum magnet width is limited by the thickness of the retaining sleeve in order to achieve maximum flux density at the superconductor surface of the hollow cylinder 22.

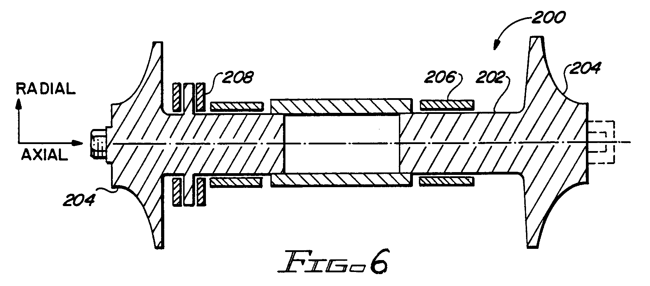

Figure 3 shows another thrust bearing 32 whose laminate structure 34 includes first and second permanent magnets 36a and 36b separated by a metallic shim 38b. Each magnet 36a and 36b is made of a rare earth material such as samarium-cobalt or neodymium-iron-boron. The magnets 36a and 36b are magnetized in an axial direction and stacked in opposing polarity such that the north poles of the first and second magnets 36a and 36b oppose each other.

The metallic shim 38b creates a path allowing magnetic flux 40a to flow between North and South poles of the first magnet 36a and magnetic flux 40b to flow between North and South poles of the second magnet 36b. When made of a high permeability metal such as mumetal, the shim 38b can pass a greater amount of flux before becoming saturated.

More importantly, the shim 38b separates the magnets 36a and 36b, providing a gap between flux lines 40a and 40b. This gap g breaks up an otherwise long flux path between opposite ends of the structure 34, and thereby shortens the reluctance path between the North and South poles of each magnet 36a and 36b. End shims 26a and 26c help to shorten the path of flux lines 40a and 40b between the North and South poles of the magnets 36a and 36b. When an external load F_{A} is applied to the structure 34, the flux lines are compressed and the gap g is reduced, causing the flux density to increase at the surface of the superconducting member 12. With higher external loads, the gap g is further reduced, causing the flux density to increase even further.

Figure 4 illustrates the stiffness of the bearing 32. Under external load F_{A}, the flux density between the surfaces of the magnets and the superconducting member of bearing 32 is lower than the corresponding flux density of a prior art bearing, yet under higher loads F_{B} and F_{C}, the flux density of the bearing 32 approaches the density of the prior art bearing. This is due to the reduction of the gap g. Thus, the laminated structure 34 of the bearing 32 has shorter flux paths and higher flux density gradients than a prior art bearing having a single magnet.

Figure 5 shows a journal bearing 42 whose laminate magnetic structure 44 has magnets 46a-46d stacked in opposing polarity. Shims 48 of mumetal are located between the magnets 46a-46d. A retaining sleeve 50 surrounds the magnets 46a-46d.

Stiffness of the bearings are determined by the number and width of magnets in the laminate structure. Thinner magnets allow for more gaps between flux fields. More gaps result in higher flux density gradients and, therefore, higher bearing stiffness. It should be noted that magnet manufacturing limitations limit thickness of the magnets. Such limitations include the ability to align the grains and magnetize the magnets in the radial direction.

The superconducting bearings with the laminated rotors provide the advantageous effects of high load capacity and stiffness. These bearings also have the advantageous effect of damping vibrational energy.

Figure 6 shows a shaft-journal system 52. A pair of turbines 54 rotate shaft 56. Journal bearings 58 support the radial load of the shaft 56 and thrust bearings 60 support the axial load of the shaft 56. The journal and thrust bearings 58 and 60 can also be adapted to support the shafts of other turbomachinery, such as compressors, pumps and flow meters. The bearing load capacity, stiffness and damping are designed according to the application.

## Claims

1. A superconducting bearing (10, 32, 18, 70) including a stator (12, 23, 22, 73) made of superconducting material and a rotor characterized by:
a stack of at least two permanent magnets (16a-16c, 36a-36b, 56a-56d, 46a-46d), each said permanent magnet providing a magnetic field; and
at least one metallic shim (17, 26, 26, 48) disposed between each pair of adjacent magnets to provide a gap (g) that increases flux density gradient, at least one surface of said stator being in communication with the magnetic fields from said magnets.

2. The bearing (10, 18) of Claim 1, characterized in that said magnets (16a-16c, 24a-24f) are stacked in alternating polarity and separated by non-permeable metallic shims (17, 26).

3. The bearing (18) of Claim 2, further characterized in that said stator includes a cylinder (22) and that said magnets (24a-24f) are radially magnetized cylindrical magnets located within said cylinder (22), whereby said bearing (18) is a journal bearing.

4. The bearing (10) of Claim 2, further characterized in that said stator includes a disk (12) and that said magnets (16a-16d) are magnetized axially, whereby said bearing (10) is a thrust bearing.

5. The bearing (32, 42) of Claim 1, characterized in that said magnets (36a-36b, 46a-46b) are stacked in opposing polarity and separated by permeable metallic shims (26, 48).

6. The bearing (42) of Claim 5, further characterized in that said stator includes a cylinder (73) and that said magnets (46a-46d) are axially magnetized cylindrical magnets located within said cylinder (73), whereby said bearing (42) is a journal bearing.

7. The bearing (32) of Claim 5, further characterized in that said stator includes a disk (23), whereby said bearing (32) is a thrust bearing.
